# FASCICULE DE BREVET EUROPEEN

(11) **EP 0 447 320 B1**
(45) Date de publication et mention de la délivrance du brevet: **12.01.1994**
(21) Numéro de dépôt: 91400690.3
(22) Date de dépôt: 14.03.1991
(51) Int. Cl.: F01D 5/18

(54) **Circuit de refroidissement interne d'une aube directrice de turbine**
Turbinenleitschaufelinnenkühlungssystem
Internal cooling circuit for the stator vane of a turbine

(30) Priorité: 14.03.1990 FR 9003236
(43) Date de publication de la demande: 18.09.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Guyon, Benoît Paul, F-77380 Combs la Ville (FR)
(74) Mandataire: Moinat, François

(56) Documents cités:
- DE-A- 2 640 827
- FR-A- 2 290 569
- GB-A- 755 919
- US-A- 3 574 481
- US-A- 4 347 037

## Description

La présente invention se rapporte à une aube directrice destinée à un turboréacteur, balayée intérieurement par de l'air de refroidissement et se composant, d'une part, d'une enveloppe ayant un profil externe aérodynamique et délimitant le bord d'attaque, l'intrados et l'extrados, et, d'autre part, d'un dispositif de refroidissement situé dans ladite enveloppe, ledit dispositif comportant une chambre à turbulence située dans la zone du bord d'attaque, au contact de ladite enveloppe et un canal d'alimentation en air de refroidissement s'étendant sur toute la hauteur de ladite aube et alimenté en air froid, ledit air de refroidissement s'évacuant de ladite aube par des trous d'évacuation prévus dans la paroi de l'enveloppe au niveau du bord de fuite ainsi que par des trous d'évacuation prévues dans l'extrados au voisinage du bord d'attaque, une pluralité de lamelles étant disposées parallèlement sur toute la hauteur de l'aube et perpendiculairement à l'axe général de celle-ci.

Les aubes directrices de turboréacteur du type mentionné sont bien connues, par exemple par le brevet US-A-3.574.481. Le canal d'alimentation est formé par l'alésage interne d'une pièce rapportée creuse, dont la paroi forme ladite cloison et qui est en appui sur des saillies de la surface intérieure de l'enveloppe, lesdites saillies formant entre elles des canaux de circulation de l'air de refroidissement.

La demande FR-A-2.290.569 décrit également une aube directrice comportant une enveloppe et une pièce rapportée interne creuse dans laquelle une cloison supplémentaire coupe le passage entre la chambre à turbulence et les canaux de circulation d'air du côté aspiration de l'aube, l'air de refroidissement pénétrant dans la chambre à turbulence pour s'évacuer vers le bord de fuite du côté de l'intrados, la moitié de l'air de refroidissement remontant ensuite le long de l'extrados depuis le bord de fuite pour s'évacuer par des trous d'évacuation prévus à l'extrémité des canaux de circulation dans la zone du côté aspiration du bord d'attaque.

Ces dispositifs de refroidissement connus permettent de refroidir avec force le bord d'attaque de l'aube directrice, ce qui se traduit par un réchauffement important de l'air de refroidissement. Il s'ensuit que cet air partiellement chaud refroidit mal les parois de l'enveloppe qui forment l'intrados et l'extrados de l'aube. De plus, dans l'aube du document FR.A. 2 290 569, l'air sortant par les trous d'évacuation prévus à l'extrémité des canaux de circulation dans la partie amont de l'extrados est relativement chaud, ce qui l'empêche de jouer le rôle de protection thermique de la face externe de l'extrados. Enfin, s'il est bien vrai que les saillies de la surface intérieure de l'enveloppe constituent des radiateurs et sont léchées par l'air de refroidissement, l'amélioration de l'échange de chaleur due à ces radiateurs est faible du fait que l'espace séparant l'enveloppe de la pièce rapportée est faible. Ceci entraîne une limitation de la température admissible des gaz chauds sortant de la chambre de combustion.

Dans les turboréacteurs en effet, les pièces les plus sollicitées thermiquement sont les aubes directrices qui sont placées à la sortie de la chambre de combustion en amont du premier étage d'aubes mobiles de la turbine, et les performances dont le turboréacteur est capable sont liées aux températures des gaz que ces aubes directrices sont capables de supporter. D'où l'intérêt, d'une part, de chercher les matériaux les mieux adaptés à ces conditions extrêmes, d'autre part, de chercher à refroidir le plus possible ces aubes, en particulier par une circulation d'air froid à l'intérieur et autour des aubes.

Le but de la présente invention est d'assurer un refroidissement dissement accru de l'aube directrice du type mentionné, ce qui permet d'admettre une température plus élevée des gaz de combustion et par le fait d'améliorer le rendement du turboréacteur.

Le but est atteint selon l'invention par le fait que la chambre à turbulence est séparée du canal d'alimentation par une cloison munie de trous de passage pour l'air de refroidissement et par le fait que chaque lamelle s'étend entre l'intrados et l'extrados depuis le bord de fuite jusqu'au dit canal d'alimentation, lesdites lamelles étant espacées l'une de l'autre et faisant office de radiateurs pour échanger la chaleur entre la partie aval de l'enveloppe et l'air circulant entre lesdites lamelles.

Grâce à cette structure, l'aube comporte deux circuits de refroidissement séparés alimentés en air froid par le canal d'alimentation. Le premier circuit de faible dimension concerne uniquement la zone du bord d'attaque. Cette partie d'air de refroidissement après réchauffement partiel s'évacue par l'extrados et constitue une pellicule d'air froid pour la protection thermique de l'extrados. Le deuxième circuit est formé par la superposition des lamelles de grande surface qui jouent le rôle de radiateurs. Les surfaces d'échanges thermiques sont ainsi nettement augmentées par rapport à celles des aubes connues, et ces échanges sont d'autant plus élevés que l'air de refroidissement utilisé dans ce deuxième circuit n'a pas été préalablement réchauffé.

Avantageusement, le canal d'alimentation s'étend entre l'intrados et l'extrados au voisinage de ladite cloison.

De préférence, l'aube directrice comporte des ailettes formant radiateurs placées entre la cloison et la partie de l'extrados la plus proche du bord d'attaque, lesdites ailettes s'étendant jusqu'aux trous d'évacuation de l'air circulant dans la chambre de turbulence.

Elle comporte également des trous d'évacuation percés dans l'extrados en aval de ladite cloison et destinés à permettre l'échappement d'une partie de l'air froid circulant dans le canal d'alimentation. Cet air froid forme ainsi une fine couche froide de protection thermique sur la face externe de l'extrados.

Elle comporte également des trous d'évacuation percés dans la partie aval de l'intrados.

Avantageusement, les lamelles sont tenues à distance les unes des autres par des nervures prévues sur au moins l'une des faces desdites lamelles.

De préférence, lesdites nervures sont sensiblement parallèles à l'intrados et à l'extrados.

D'autres avantages et caractéristiques de l'invention ressortiront à la lecture de la description suivante faite en référence au dessin annexé dans lequel :
la figure 1 représente une coupe perpendiculaire à l'axe général de l'aube d'un mode de réalisation avantageux d'une aube directrice selon l'invention,
la figure 2 est une coupe suivant l'axe général de l'aube selon la ligne II-II de la figure 1.

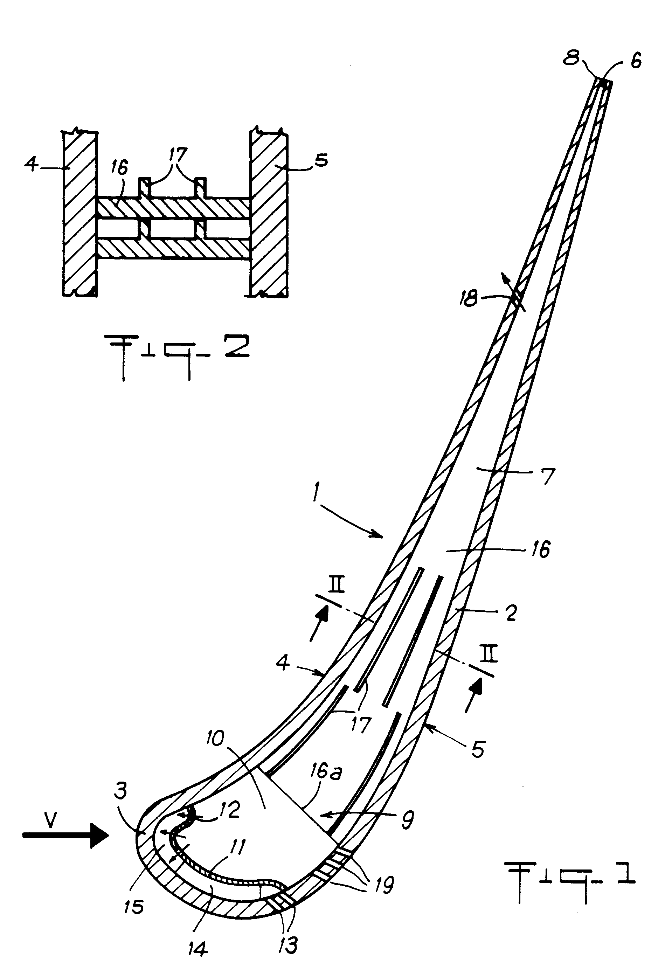

L'aube directrice 1 de la présente invention fait partie d'un ensemble d'aubes fixes régulièrement réparties dans l'espace annulaire par lequel s'échappent les gaz chauds générés dans la chambre de combustion d'un turboréacteur. Cet ensemble d'aubes fixes est disposé en amont d'un ensemble d'aubes mobiles d'une turbine à haute pression, et il a pour rôle de dévier le jet de gaz chauds issu de la chambre de combustion et venant frapper perpendiculairement le bord d'attaque 3 de l'aube 1 avec une vitesse V.

L'aube directrice 1 est formée par une enveloppe métallique creuse 2 dont la section présente un profil externe aérodynamique. Cette enveloppe 2 délimite le bord d'attaque 3 de l'aube 1, l'intrados 4 et l'extrados 5, et elle confère à l'aube la stabilité nécessaire de forme et la résistance mécanique. Elle est réalisée soit en une seule pièce par coulée de précision, soit en deux pièces par usinage traditionnel, électroérosion ou usinage chimique. L'épaisseur de cette enveloppe 2 peut être homogène ou évolutive. Une fente 6, permettant à la cavité interne 7 de l'enveloppe 2 de communiquer avec l'extérieur, est prévue au niveau du bord de fuite 8.

L'enveloppe métallique 2 est fixée de manière connue par ses deux extrémités au carter du turboréacteur, et elle comporte dans sa cavité interne 7 un dispositif de refroidissement 9 qui est alimenté en air froid issu d'un système extérieur à l'aube 1, ledit air froid pénétrant dans ladite cavité interne 7 par une ouverture prévue sur une face d'extrémité de l'aube 1, l'autre face d'extrémité étant obturée, et étant distribué dans ladite aube 1 par un canal d'alimentation 10 qui s'étend dans le prolongement de ladite ouverture sur toute la hauteur de l'aube 1. L'air de refroidissement s'évacue de ladite aube 1, après usage, soit par la fente 6 du bord de fuite 8, soit par des trous d'évacuation prévus dans la paroi de l'enveloppe 2.

Le dispositif de refroidissement 9 comporte essentiellement une cloison longitudinale 11 sensiblement parallèle à la paroi de l'enveloppe 2 qui relie l'intrados 4 à l'extrados 5 au voisinage du bord d'attaque 3 et délimite le canal d'alimentation 10 du côté du bord d'attaque 3. Cette cloison 11 comporte au voisinage du bord d'attaque 3 des trous de passage 12 pour l'air d'alimentation issu du canal d'alimentation 10. Des trous d'évacuation 13 sont percés dans la paroi de l'extrados 5 au voisinage du bord d'attaque 3 pour permettre à l'air de refroidissement, qui pénètre par les trous de passage 12 dans l'espace sectoriel de forme annulaire délimité par la cloison 11 et l'enveloppe 2 au voisinage du bord d'attaque 3, de s'évacuer à l'extérieur de l'aube 1 par les trous d'évacuation 13. Des ailettes 14 formant radiateurs relient la cloison 11 à la partie de l'extrados 5 la plus proche du bord d'attaque 3. L'air de refroidissement passant par les trous de passage 12 pénètre ainsi dans une chambre à turbulence 15 jouxtant le bord d'attaque 3 où il refroidit fortement celui-ci,puis il circule entre les ailettes 14 et s'évacue à l'extérieur de l'aube 1 par les trous d'évacuation 13. Cet espace sectoriel de forme annulaire constitue ainsi un premier circuit de refroidissement destiné à refroidir énergiquement la zone de l'enveloppe 2 voisine du bord d'attaque 3.

Un deuxième circuit de refroidissement est constitué, du côté du bord de fuite 8, par une pluralité de fines lamelles 16 qui sont interposées, du côté du bord de fuite 8 entre l'intrados 4 et l'extrados 5, dans la cavité interne 7 et sur toute la hauteur de l'aube 1. Ces lamelles 16, qui ont une surface relativement grande, s'étendent depuis le bord de fuite 8 jusqu'à une certaine distance de la cloison 11, de telle manière que leurs bords libres 16a délimitent le canal d'alimentation 10 du côté du bord de fuite 8. Ces lamelles 16 sont tenues à distance l'une de l'autre et perpendiculairement à l'axe général de l'aube grâce à des nervures 17 qui sont prévues sur l'une au moins des faces desdites lamelles et qui sont sensiblement parallèles à la direction générale de l'aube 1. Les lamelles 16 sont destinées à jouer le rôle de radiateurs permettant d'échanger la chaleur qu'elles reçoivent par conduction de l'enveloppe 2, avec l'air de refroidissement qui circule entre elles, cet air, une fois réchauffé, s'évacuant en partie par la fente 6 prévue dans le bord de fuite 8. Des trous d'évacuation supplémentaires 18 sont percés dans le dernier tiers de l'intrados 4 voisin du bord de fuite 8 pour permettre à une partie de l'air réchauffé de former une couche d'air de protection sur la paroi de l'intrados 4.

De préférence, le canal d'alimentation 10 en air froid s'étend de l'intrados 4 à l'extrados 5 et des trous d'évacuation 19 sont prévus dans la paroi de l'extrados 5 au droit du canal d'alimentation 10. L'air froid s'évacuant par ces trous d'évacuation 19 est destiné à créer une mince pellicule d'air froid sur la face externe de l'extrados 5 qui est destinée à protéger la partie aval de l'extrados 5.

Les lamelles 16 sont peu éloignées l'une de l'autre de telle manière que les canaux qui les séparent soient de faible épaisseur. Les surfaces d'échange de chaleur entre l'aube 1 et l'air de refroidissement circulant dans le deuxième circuit de refroidissement sont ainsi nettement augmentées par rapport aux surfaces d'échange des aubes connues. Ceci permet d'utiliser des gaz de combustion ayant une plus grande température et par le fait même d'améliorer le rendement des turboréacteurs.

Les éléments du circuit de refroidissement 9, c'est-à-dire la cloison 11, les ailettes 14 et les lamelles 16 sont fixés à l'enveloppe 2 par tout moyen connu de l'homme de l'art. Ce qui importe c'est que les liaisons soient suffisamment intimes pour permettre un transfert de chaleur entre l'enveloppe 2 et ces éléments.

## Revendications

1. Aube directrice destinée à un turboréacteur, balayée intérieurement par de l'air de refroidissement et se composant, d'une part, d'une enveloppe (2) ayant un profil externe aérodynamique et délimitant le bord d'attaque (3), l'intrados (4) et l'extrados (5), et, d'autre part, d'un dispositif de refroidissement (9) situé dans ladite enveloppe (2) ledit dispositif (9) comportant une chambre à turbulence, située dans la zone du bord d'attaque (3) au contact de ladite enveloppe (2) et un canal d'alimentation (10) en air de refroidissement s'étendant sur toute la hauteur de ladite aube (1) et alimenté en air froid, ledit air de refroidissement s'évacuant, après usage, de ladite aube (1) par des trous d'évacuation (6) prévus dans la paroi de l'enveloppe (2) au niveau du bord de fuite (8) ainsi que par des trous d'évacuation (13) prévus dans l'extrados (5) au voisinage du bord d'attaque (3), une pluralité de lamelles (16) étant disposées parallèlement sur toute la hauteur de l'aube (1) et perpendiculairement à l'axe général de celle-ci,
caractérisée en ce que,
la chambre à turbulence (15) est séparée du canal d'alimentation (10) par une cloison (11) munie de trous de passage (12) pour l'air de refroidissement et en ce que chaque lamelle (16) s'étend entre l'intrados (4) et l'extrados (5) depuis le bord de fuite (8) jusqu'au dit canal d'alimentation (10), lesdites lamelles (16) étant espacées l'une de l'autre et faisant office de radiateurs pour échanger la chaleur entre la partie aval de l'enveloppe (2) et l'air circulant entre lesdites lamelles.

2. Aube directrice selon la revendication 1, caractérisée en ce que le canal d'alimentation (10) s'étend entre l'intrados (4) et l'extrados (5) au voisinage de ladite cloison (11).

3. Aube directrice selon l'une quelconque des revendications 1 et 2, caractérisée en ce qu'elle comporte des ailettes (14) formant radiateurs placées entre la cloison (11) et la partie de l'extrados (5) la plus proche du bord d'attaque (3), lesdites ailettes (14) s'étendant jusqu'aux trous d'évacuation (13) de l'air circulant dans la chambre de turbulence (15).

4. Aube directrice selon l'une quelconque des revendications 1 à 3, caractérisée en ce qu'elle comporte des trous d'évacuation (19) percés dans l'extrados (5) en aval de ladite cloison (11) et destinés à permettre l'échappement d'une partie de l'air froid circulant dans le canal d'alimentation (10).

5. Aube directrice selon l'une quelconque des revendications 1 à 4, caractérisée en ce qu'elle comporte également des trous d'évacuation (18) percés dans la partie aval de l'intrados (4).

6. Aube directrice selon l'une quelconque des revendications 1 à 5, caractérisée en ce que les lamelles (16) sont tenues à distance les unes des autres par des nervures (17) prévues sur au moins l'une des faces desdites lamelles (16).

7. Aube directrice selon la revendication 6, caractérisée en ce que lesdites nervures (17) sont sensiblement parallèles à l'intrados (4) et l'extrados (5).

## Patentansprüche

1. Leitschaufel für ein TL-Triebwerk, die innen von Kühlungsluft bestrichen wird und einerseits aus einer Hülle (2) mit einem aerodynamischen Außenprofil, die die Vorderkante (3), die Druckseite (4) und die Saugseite (5) begrenzt, und andererseits aus einer Kühlungsvorrichtung (9) innerhalb der genannten Hülle (2) besteht, wobei die genannte Vorrichtung (9) aus einer Wirbelkammer, die sich im Bereich der Vorderkante (3) in Berührung mit der genannten Hülle (2) befindet, und aus einem Zufuhrkanal (10) für Kühlungsluft besteht, der über die gesamte Höhe der genannten Schaufel (1) verläuft und mit kalter Luft gespeist wird, wobei die genannte Kühlungsluft durch Ablauföffnungen (6), die in der Wandung der Hülle (2) in Höhe der Hinterkante (8) vorgesehen sind, sowie durch Ablauföffnungen (13), die in der Saugseite (5) in der Nähe der Vorderkante (3) vorgesehen sind, austritt, wobei mehrere Lamellen (16) über die gesamte Höhe der Schaufel (1) parallel zueinander und senkrecht zu deren Hauptachse angeordnet sind,
dadurch gekennzeichnet, daß die Wirbelkammer (15) von dem Zufuhrkanal (10) durch eine Trennwand (11) abgetrennt wird, die mit Durchlaßöffnungen (12) für die Kühlungsluft versehen ist, und daß jede Lamelle (16) zwischen der Druckseite (4) und der Saugseite (5) von der Hinterkante (8) bis zu dem genannten Zufuhrkanal (10) verläuft, wobei die genannten Lamellen (16) in Abstand voneinander angeordnet sind und als Kühler für den Wärmetausch zwischen dem hinteren Teil der Hülle (2) und der zwischen den genannten Lamellen zirkulierenden Luft dienen.

2. Leitschaufel nach Anspruch 1, dadurch gekennzeichnet, daß der Zufuhrkanal (10) zwischen der Druckseite (5) und der Saugseite (5) in der Nähe der genannten Trennwand (11) verläuft.

3. Leitschaufel nach einem der Ansprüche 1 und 2, dadurch gekennzeichnet, daß sie Rippen (14) als Kühler aufweist, die zwischen der Trennwand (11) und dem Teil der Saugseite (5) angeordnet sind, der der Vorderkante (3) am nächsten liegt, wobei die genannten Rippen (14) bis zu den Ablauföffnungen (13) für die Luft, die in der Wirbelkammer (15) zirkuliert, verlaufen.

4. Leitschaufel nach einem der Ansprüche 1 bis 3, dadurch gekennzeichnet, daß sie Ablauföffnungen (19) aufweist, die in der Saugseite (5) stromabwärts von der genannten Trennwand (11) gebohrt sind und das Austreten eines Teils der in dem Zufuhrkanal (10) zirkulierenden kalten Luft ermöglichen sollen.

5. Leitschaufel nach einem der Ansprüche 1 bis 4, dadurch gekennzeichnet, daß sie auch Ablauföffnungen (18) aufweist, die im hinteren Teil der Druckseite (4) gebohrt sind.

6. Leitschaufel nach einem der Ansprüche 1 bis 5, dadurch gekennzeichnet, daß die Lamellen (16) durch Rippen (17), die an mindestens einer Seite der genannten Lamellen (16) vorgesehen sind, in Abstand voneinander gehalten werden.

7. Leitschaufel nach Anspruch 6, dadurch gekennzeichnet, daß die genannten Rippen (17) etwa parallel zu der Druckseite (4) und der Saugseite (5) verlaufen.

## Claims

1. Guide vane intended for a jet engine, swept internally by cooling air and composed, on the one hand, of a skin (2) having an aerodynamic external profile and defining the leading edge (3), the lower surface (4) and the upper surface (5), and, on the other hand, of a cooling device (9) located in the said skin (2), the said device (9) including a swirl chamber located in the zone of the leading edge (3) in contact with the said skin (2) and a duct (10) for supplying cooling air extending over the entire height of the said vane (1) and supplied with cold air, the said cooling air being discharged, after use, from the said vane (1) via discharge holes (6) provided in the wall of the skin (2) level with the trailing edge (8) as well as via discharge holes (13) provided in the upper surface (5) in the vicinity of the leading edge (3), a plurality of strips (16) being arranged in parallel over the entire height of the vane (1) and perpendicular to the overall axis of the latter, characterized in that,
the swirl chamber (15) is separated from the supply duct (10) by a partition (11) provided with passage holes (12) for the cooling air and in that each strip (16) extends between the lower surface (4) and the upper surface (5) from the trailing edge (8) as far as the said supply duct (10), the said strips (16) being spaced from one another and acting as radiators for exchanging heat between the downstream part of the skin (2) and the air circulating between the said strips.

2. Guide vane according to Claim 1, characterized in that the supply duct (10) extends between the lower surface (4) and the upper surface (5) in the vicinity of the said partition (11).

3. Guide vane according to either one of Claims 1 and 2, characterized in that it includes fins (14) forming radiators placed between the partition (11) and the part of the upper surface (5) which is closest to the leading edge (3), the said fins (14) extending as far as the holes (13) for discharging air circulating in the swirl chamber (15).

4. Guide vane according to any one of Claims 1 to 3, characterized in that it includes discharge holes (19) pierced in the upper surface (5) downstream of the said partition (11) and intended to allow part of the cold air circulating in the supply duct (10) to be exhausted.

5. Guide vane according to any one of Claims 1 to 4, characterized in that it also includes discharge holes (18) pierced in the downstream part of the lower surface (4).

6. Guide vane according to any one of Claims 1 to 5, characterized in that the strips (16) are held at a distance from one another by ribs (17) provided on at least one of the faces of the said strips (16).

7. Guide vane according to Claim 6, characterized in that the said ribs (17) are substantially parallel to the lower surface (4) and the upper surface (5).
